# EUROPÄISCHE PATENTSCHRIFT

(11) **EP 1 008 010 B1**
(45) Veröffentlichungstag und Bekanntmachung des Hinweises auf die Patenterteilung: **14.11.2001**
(21) Anmeldenummer: 98943843.7
(22) Anmeldetag: 05.08.1998
(51) Int. Cl.: G02C 5/22

(54) **FEDERSCHARNIER**
SPRING HINGE
CHARNIERE A RESSORT

(30) Priorität: 14.08.1997 DE 19735230
(43) Veröffentlichungstag der Anmeldung: 14.06.2000
(73) Patentinhaber: OBE Ohnmacht & Baumgärtner GmbH & Co. KG, 75228 Ispringen (DE)
(72) Erfinder: SCHUCHARD, Klaus, D-75305 Neuenbürg (DE); WAGNER, Reiner, D-75228 Ispringen (DE)
(74) Vertreter: Gleiss, Alf-Olav, Dr.jur. Dipl.-Ing.
(86) Internationale Anmeldenummer: EP9804867
(87) Internationale Veröffentlichungsnummer: WO9909450

(56) Entgegenhaltungen:
- EP-A- 0 426 947
- EP-A- 0 679 920
- DE-A- 4 415 307
- DE-A- 19 511 167
- DE-U- 9 114 917
- GB-A- 2 268 282

## Beschreibung

Die Erfindung betrifft ein Federscharnier für Brillen mit einem Gehäuse, einem Scharnierteil, das zumindest teilweise innerhalb des Gehäuses verschiebbar angeordnet ist, einem Verschlußteil, das im Gehäuse angeordnet ist, und einer Feder, die sich einerseits am Scharnierteil und andererseits am verschlußteil abstützt, und mit einer zwei Anschlagelemente aufweisenden Anschlagvorrichtung.

Federscharniere für Brillen sind seit langem bekannt. Sie weisen ein Gehäuse auf, in dem ein Scharnierteil gegen die Kraft einer Feder verschiebbar angeordnet ist. Wird der Brillenbügel, auf dem das Gehäuse aufgebracht ist, aus der aufgeklappten Stellung weiter nach außen verschwenkt, wird die Feder zusammengedrückt. In diesem Fall tritt häufig das Problem auf, daß die Feder auf Block gedrückt wird. Darunter ist zu verstehen, daß die Feder ihre minimale Federlänge erreicht hat und nicht weiter zusammendrückbar ist. Dies hat jedoch negative Auswirkung auf die Federeigenschaften. Im schlimmsten Fall kann dadurch die Feder zerstört werden.

Um dieses Problem zu lösen, hat man im Stand der Technik Anschlagelemente vorgesehen, die verhindern sollen, daß die Feder auf ihre minimale Länge gedrückt wird. So ist beispielsweise aus der Druckschrift DE 91 14 917 U1 eine Anschlagvorrichtung bekannt, die extern, das heißt außerhalb des Federscharniergehäuses, vorgesehen ist. Sie umfaßt ein erstes Anschlagelement, das im Bereich des Scharnierauges vorgesehen ist und ein zweites Anschlagelement, das von dem mit dem Brillenbügel über das Scharnier verbundenen Mittelteil gebildet ist. Damit hängt die Funktion der Anschlagvorrichtung im wesentlichen davon ab, wie das mit dem Brillenbügel verbundene Scharnierteil auf dem Mittelteil aufgebracht ist. Da diese Arbeiten vom Hersteller des Brillengestells durchgeführt werden, hat der Hersteller des Federscharniers mithin keinen Einfluß auf die einwandfreie Funktionsweise der Anschlagvorrichtung.

Aus der Druckschrift EP 0 426 947 ist eine Anschlagvorrichtung bekannt, die innerhalb des Federscharniergehäuses angeordnet ist. Das erste Anschlagelement wird hierbei durch einen Stift gebildet, der zur Führung der Feder dient, während das zweite Anschlagelement in Form einer am Scharnierteil angebrachten, sich nahezu über die gesamte Länge des Scharniergehäuses erstreckenden Verlängerung gebildet ist. Diese Anordnung hat den Nachteil, daß sie aufwendig und damit teuer ist.

Die Aufgabe der Erfindung besteht deshalb darin, ein Federscharnier für Brillen zu schaffen, das eine einfach herzustellende, kostengünstige Anschlagvorrichtung aufweist.

Diese Aufgabe wird durch ein Federscharnier gelöst, das die Merkmale des Anspruchs 1 aufweist. Dadurch, daß eines der beiden Anschlagelemente am Scharnierteil und das andere Anschlagelement am Gehäuse oder am Verschlußteil angeordnet sind, läßt sich eine einfach herzustellende, kostengünstige, innerhalb des Gehäuses liegende Anschlagvorrichtung schaffen. Als Verschlußteil ist in diesem Zusammenhang jenes Teil zu verstehen, das als feststehendes Widerlager für die Feder dient. Dieses Verschlußteil kann entweder einstückig mit dem Gehäuse gebildet sein, oder als separat in das Gehäuse einzubringendes Teil.

In einer vorteilhaften Weiterbildung der Erfindung weist das Verschlußteil eine elastische Zunge mit einem freien Ende auf, die zum Scharnierteil hin gebogen ist und in eine Ausnehmung am Scharnierteil eingreift und die als zweites Anschlagelement mit dem ersten Anschlagelement zusammenwirkt. Die elastische Zunge des Verschlußteils führt also eine Doppelfunktion aus. Einerseits bildet sie mit ihrem freien Ende das Anschlagelement, so daß die Verschiebbarkeit des Scharnierteils gegen die Federkraft auf einen vorbestimmten Weg begrenzt ist; andererseits bildet sie eine Verliersicherung für das Scharnierteil, da sie zu diesem Scharnierteil hin gebogen ist und in die am Scharnierteil ausgebildete Ausnehmung eingreift. Es wird somit eine Rasteinrichtung bereitgestellt, die verhindert, daß das einmal in das Verschlußteil eingesetzte Scharnierteil wieder herausrutschen kann. Dadurch wird die Montage des Federscharniers stark vereinfacht, da nun nicht darauf geachtet werden muß, daß sich beim Verschließen des Gehäuses irgendein Bauteil nicht an der vorgegebenen Position befindet. Außerdem verriegelt sich das Scharnierteil im Verschlußteil selbst, so daß eine besonders einfache Montage des Federscharniers erfolgen kann. Darüber hinaus ist es vorteilhaft, daß das Scharnierteil und Verschlußteil als vormontierte Baugruppe bereitgestellt werden kann. Der Zusammenbau des Federscharniers wird dann lediglich dadurch erreicht, daß die aus Scharnierteil, Feder und Verschlußteil vormontierte Baugruppe in das Gehäuse eingelegt beziehungsweise eingeschoben wird, so daß es anschließend mit einem Brillenbügel verschlossen werden kann. Selbstverständlich ist es jedoch auch möglich, ein geschlossenes Gehäuse zu verwenden, das lediglich an der Stirnseite eine Öffnung aufweist, durch die die vormontierte Baugruppe eingeschoben wird.

In einer vorteilhaften Weiterbildung der Erfindung weist das Scharnierteil eine sich in Längsrichtung erstreckende Nut auf, wobei das zweite Anschlagelement in diese Nut eingreift. Als erstes Anschlagelement dient dabei eine Wand dieser Nut. Diese Weiterbildung ist deshalb besonders vorteilhaft, weil die Nut bereits bei den bisherigen Scharnierteilen aus anderen Gründen vorgesehen war. Somit ist zur Schaffung der erfindungsgemäßen Anschlagvorrichtung lediglich das zweite Anschlagelement vorzusehen.

In einer vorteilhaften Weiterbildung der Erfindung umgibt das Verschlußteil zumindest einen Längsabschnitt des Scharnierteils und dient somit als Führung.

In einer vorteilhaften Weiterbildung der Erfindung weist das Verriegelungselement ein Verschlußteil auf, das mit einer Ausnehmung im Gehäuse verriegelnd zusammenwirkt.

In einer vorteilhaften Weiterbildung der Erfindung ist die Nut an der der Unterseite des Gehäuses zugewandten Seite des Scharnierteils vorgesehen. Als Unterseite des Gehäuses wird jene Seite bezeichnet, die dem Brillenbügel zugewandt ist.

In einer vorteilhaften Weiterbildung der Erfindung ist am Gehäuse ein Vorsprung vorgesehen, der als zweites Anschlagelement dient und in die Nut des Scharnierteils eingreift. Aus fertigungstechnischen Gründen ist diese Ausführungsform dann vorteilhaft, wenn die Unterseite des Gehäuses durch den Brillenbügel gebildet wird. Die Unterseite des Federscharniergehäuses selbst ist offen.

In einer vorteilhaften Weiterbildung der Erfindung ist das Verschlußteil und die als zweites Anschlagelement dienende Zunge einteilig ausgebildet.

Weitere vorteilhafte Ausgestaltungen sind in den Unteransprüchen angegeben.

Die Erfindung wird nun anhand von Ausführungsbeispielen mit Bezug auf die Zeichnung näher beschrieben. Dabei zeigen:
- Figur 1A: eine schematische Darstellung eines Scharniers gemäß einem ersten Ausführungsbeispiel in einer ersten Position,
- Figur 1B: eine schematische Darstellung eines Federscharniers gemäß einem zweiten Ausführungsbeispiel,
- Figur 1C: ein weiteres Ausführungsbeispiel eines Federscharniers,
- Figur 2: das in Figur 1A gezeigte Ausführungsbeispiel in einer zweiten Position,
- Figuren 3a bis d: verschiedene Ansichten eines Verschlußteils,
- Figur 4: drei Ansichten eines Scharnierteils,
- Figur 5: eine schematische Darstellung eines Federscharniers gemäß einem vierten Ausführungsbeispiel in einer ersten Position,
- Figur 6: das in Figur 5 gezeigte Ausführungsbeispiel in einer zweiten Position,
- Figur 7: eine schematische Darstellung eines Federscharniers gemäß einem fünften Ausführungsbeispiel in einer ersten Position, und
- Figur 8: das in Figur 7 gezeigte Ausführungsbeispiel in einer zweiten Position.

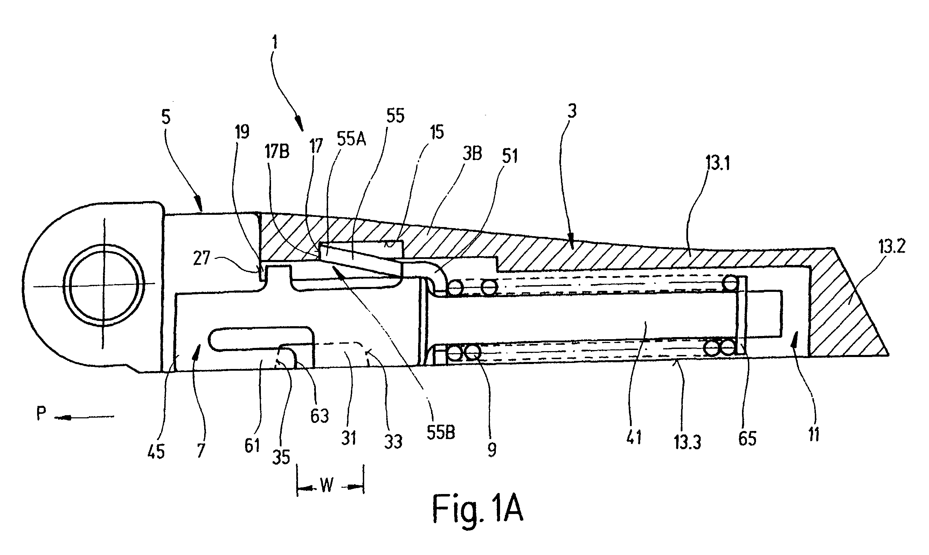

In Figur 1A ist ein Federscharnier 1 schematisch dargestellt, das bei Brillen zur Verbindung eines Brillenbügels mit einem an der Brillenfassung angebrachten Mittelteilscharnier verbunden ist. Das Federscharnier 1 umfaßt ein längliches Federscharniergehäuse 3, im folgenden kurz Gehäuse genannt, ein Scharnierteil 5, ein Verschlußteil 7 sowie eine rein schematisch dargestellte Feder 9.

Das Gehäuse 3 ist im vorliegenden Ausführungsbeispiel gemäß Figur 1A im Querschnitt rechteckförmig ausgebildet, wobei sich jedoch der Querschnitt in Längsrichtung verändert. Selbstverständlich sind auch andere Querschnittsformen denkbar. Das Gehäuse 3 weist eine Ausnehmung 11 auf, die je nach Bedarf im Querschnitt rechteckförmig oder als Bohrung kreisförmig ausgebildet ist. Die längliche Ausnehmung 11 erstreckt sich in Längsrichtung des Gehäuses 3 und wird von fünf Gehäusewandungen 13 begrenzt, wobei die Gehäusewandungen 13.1, 13.2 und 13.3 in Figur 1A sichtbar sind. Die beiden anderen Gehäusewandungen liegen parallel zur Zeichenebene und sind nicht sichtbar.

In der in Figur 1A oben liegenden Gehäusewandung 13.1, die auch als Oberseite bezeichnet ist, ist an deren der Ausnehmung 11 zugewandten Seite eine Ausnehmung 15 vorgesehen, die zumindest eine senkrecht zur Längsrichtung des Gehäuses sich erstreckende Wand 17 aufweist. Diese Wand 17 ist jenem Längsende des Gehäuses 3 zugewandt, die eine Öffnung 19 der Ausnehmung 11 aufweist.

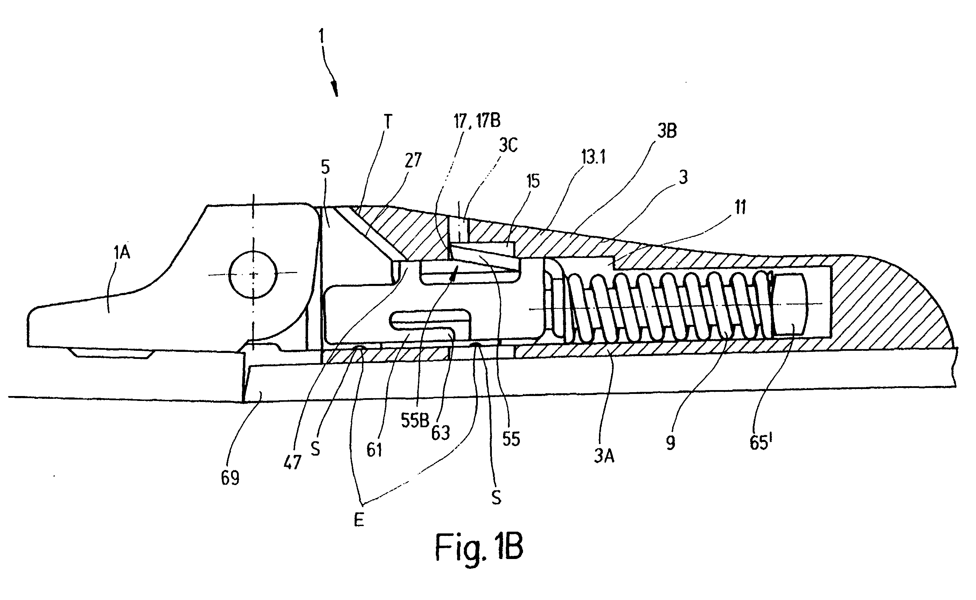

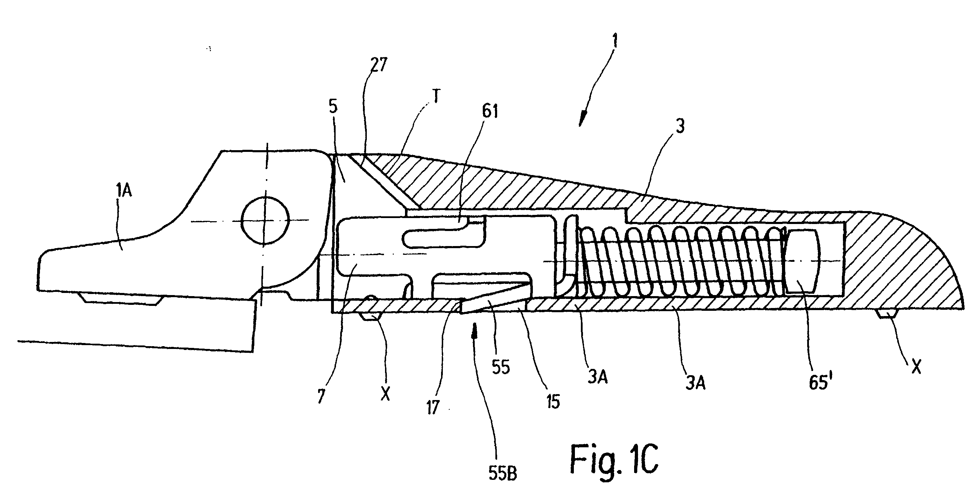

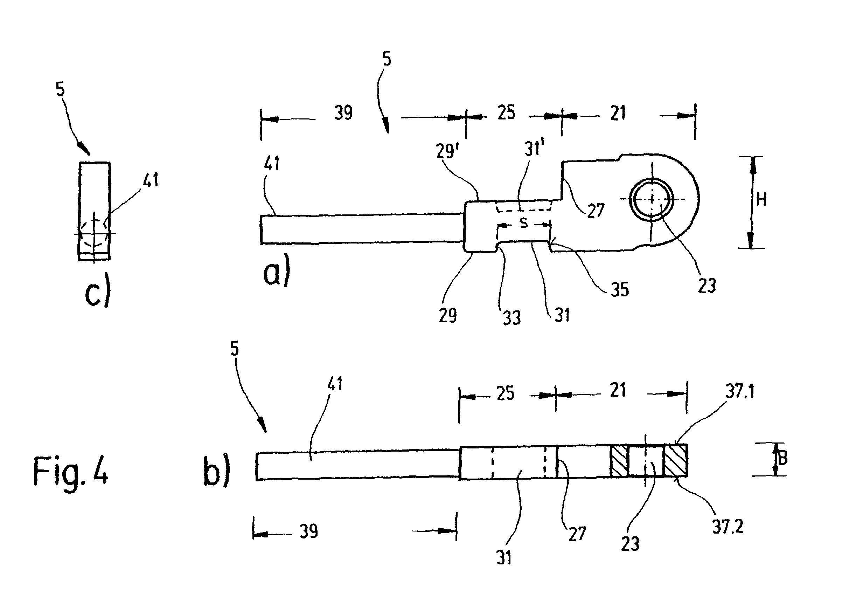

Das detailliert in Figur 4 dargestellte Scharnierteil 5 besitzt einen ersten Längsabschnitt 21, der als Scharnierauge bezeichnet wird und eine Bohrung 23 aufweist. Diese Bohrung 23 verläuft senkrecht zur Längsrichtung des Scharnierteils 5 und dient zur Aufnahme einer Schraube, die das Scharnierteil 5 mit einem weiteren Scharnierteil 1A (Figuren 1B und 1C) des Mittelteilscharniers schwenkbar verbindet. Dem Längsabschnitt 21 schließt sich ein zweiter Längsabschnitt 25 an, der eine geringere Höhe H aufweist, so daß sich zwischen Längsabschnitt 21 und Längsabschnitt 25 eine Stufe 27 ausbildet.

An der Unterseite 29 des Längsabschnitts 25 ist eine Ausnehmung 31 vorgesehen, die sich in Längsrichtung über eine Strecke s erstreckt und die vorzugsweise durch eine Einprägung realisiert wird. Die Ausnehmung 31 wird in Längsrichtung begrenzt durch eine erste Schulter 33 und eine zweite Schulter 35, wobei die Schulter 35 dem Längsabschnitt 21 zugewandt ist. Wie in Figur 4 b gestrichelt angedeutet, erstreckt sich die Ausnehmung 31 über die gesamte Breite B des Längsabschnitts 25. Damit ist die Ausnehmung 31 zu beiden Längsseiten 37.1 und 37.2 hin offen. Es ist jedoch auch denkbar, daß die Ausnehmung 31 lediglich zu einer Längsseite 37 hin geöffnet ist. Es ist jedoch auch möglich an der Unterseite 29' des Längsabschnitts 25 eine Ausnehmung 31' (gestrichelt dargestellt) auszubilden, je nach dem, wie das Verschlußteil 7 in das Gehäuse 3 eingesetzt ist.

An den Längsabschnitt 25 schließt sich ein weiterer Längsabschnitt 39 an, der im folgenden als Bolzen 41 bezeichnet wird. Im vorliegenden Ausführungsbeispiel ist der Bolzen 41 im Querschnitt rund ausgebildet, was in Figur 4c gestrichelt dargestellt ist. Dieser Bolzen 41 dient zur Führung der Feder 9 und weist einen Durchmesser auf, der geringer ist als die Höhe des Längsabschnitts 25.

Figur 4c läßt noch erkennen, daß die Längsabschnitte 21 und 25 im Querschnitt rechteckförmig ausgebildet sind.

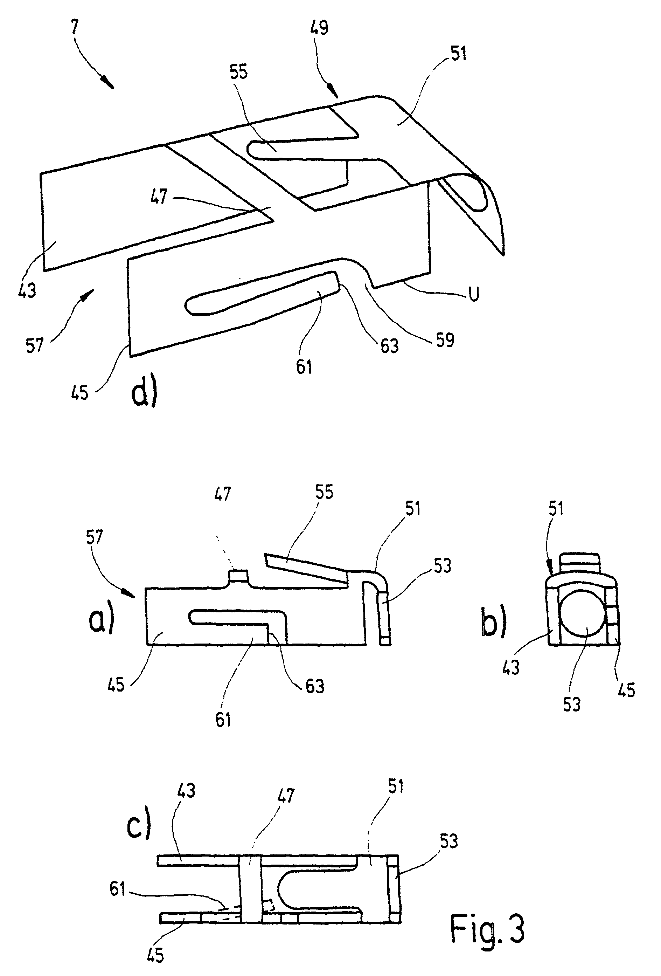

Das in Figur 3 detailliert dargestellte Verschlußteil 7 weist zwei sich in Längsrichtung erstrekkende, parallel zueinander angeordnete Seitenwände 43 und 45 auf, die an einer Längsseite, im vorliegenden Ausführungsbeispiel an der oberen Seite, über einen Steg 47 miteinander verbunden sind. Darüber hinaus ist an einem Längsende 49 der beiden Seitenwände 43, 45 ein Abschlußelement 51 vorgesehen, das an den Oberseiten der beiden Seitenwände 43, 45 angebracht ist und sich bogenförmig zur Unterseite U des Verschlußteils erstreckt. Dieses Abschlußelement 51 bildet quasi einen Längsabschluß des Verschlußteils 7. Wie in der Figur 3a deutlich zu erkennen, weist das Abschlußelement 51 einen vorzugsweise kreisförmigen Durchbruch 53 auf.

Das Abschlußelement 51 weist darüber hinaus eine federnde Lasche 55 auf, die sich in Längsrichtung zu der dem Abschlußelement 51 gegenüberliegenden Längsseite 57 des Verschlußteils 7 erstreckt. Darüber hinaus ist die Lasche 55 nach oben, das heißt weg von den Seitenwänden 43, 45, gebogen. Bezogen auf die Darstellung in Figur 3a erstreckt sich die Lasche 55 also von rechts unten nach links oben.

Die Seitenwand 45 weist eine zur Unterseite U hin randoffene Ausnehmung 59 auf, die sich in Längsrichtung des Verschlußteils 7 erstreckt. In diese Ausnehmung 59 ragt eine ebenfalls in Längsrichtung sich erstreckende Zunge 61, die an ihrem der Längsseite 57 zugewandten Ende mit der Seitenwand 45 verbunden ist. Vorzugsweise sind Seitenwand 45 und Zunge 61 einstückig ausgebildet.

Die Zunge 61 weist ein freies, das heißt nicht mit der Seitenwand 45 verbundenes Ende 63 auf, das innerhalb des Raumes liegt, der durch die beiden Seitenwände 43 und 45 definiert wird.

In Figur 3c ist deutlich zu erkennen, daß die Zunge 61 nach innen, das heißt zur Mitte des Verschlußteils 7 hin, gebogen ist. Durch entsprechende Materialwahl hat die Zunge 61 elastische Eigenschaften, so daß sie in die durch die Seitenwand 45 gebildete Ebene drückbar ist.

Beim Zusammenbau des in Figur 1A gezeigten Federscharniers 1 wird zunächst das Scharnierteil 5 mit seinem Längsabschnitt 39 von der Längsseite 57 kommend in das Verschlußteil 7 eingebracht. In der eingebrachten Stellung liegt der Längsabschnitt 25 vollständig innerhalb des Verschlußteils 7, wobei der Bolzen 41 die öffnung 53 durchgreift. Der Steg 47 übergreift dabei den Längsabschnitt 25.

Anschließend wird die Feder 9 auf den Bolzen 41 aufgebracht und zwischen dem Anschlußelement 51 und einer am gegenüberliegenden Ende des Bolzens 41 angebrachten, schematisch dargestellten Befestigungsvorrichtung 65 eingespannt. Bei der Befestigungsvorrichtung 65 handelt es sich beispielsweise um einen aufgebrachten Ring oder lediglich um eine Quetschung 65' (Figuren 1B und 1C) des Bolzens 41.

Diese aus Scharnierteil 5, Verschlußteil 7 und Feder 9 bestehende Baueinheit wird dann in die Ausnehmung 11 des Gehäuses 3 eingebracht, derart, daß die Lasche 55 in die Ausnehmung 15 einrastet und die Baueinheit verriegelt.

In der in Figur 1A gezeigten Stellung des Scharnierteils 5 relativ zum Verschlußteil 7 liegt das freie Ende 63 der Zunge 61 im Bereich der benachbarten Ausnehmung 31. Das freie Ende 63 weist einen Abstand zur Schulter 33 auf, der in der Figur 1 mit w bezeichnet ist.

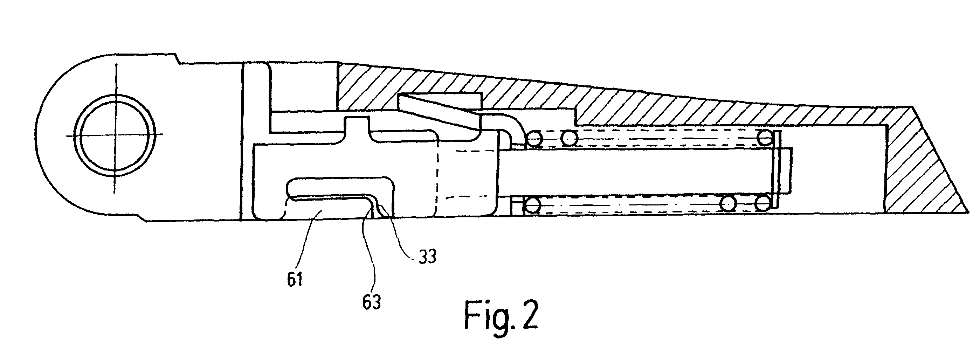

Wird nun das Scharnierteil 5 in Richtung des Pfeils P verlagert, was beispielsweise beim Überdrücken des Brillenbügels erfolgt, verlagert sich die Schulter 33 in Richtung des freien Endes 63. Damit vergrößert sich aber auch jener Längsabschnitt der Zunge 61, der im Bereich der beiden Schultern 33 und 35, also der Ausnehmung 31, liegt. Bedingt durch die federnde Eigenschaft der Zunge 61 greift diese senkrecht zur Zeichenebene der Figur 1A in die Ausnehmung 31 mit zunehmender Verlagerung ein. Sobald das Scharnierteil 5 um die Strecke w in Pfeilrichtung P verlagert ist, stößt die Schulter 33 an dem freien Ende 63 der Zunge 61 an. Diese Stellung ist in Figur 2 dargestellt, wobei gleiche Teile mit gleichen Bezugszeichen gekennzeichnet sind. Deutlich zu erkennen ist, daß das freie Ende 63 der Zunge 61 direkt an der Schulter 33 anliegt. Damit begrenzt das freie Ende 63, das in die Ausnehmung 31 ragt, den Verlagerungsweg des Scharnierteils 5 gegen die Federkraft der Feder 9. Aus den Figuren 1A und 2 ergibt sich, daß der maximale Verlagerungsweg der Strecke w entspricht.

Die Zunge 61 mit dem freien Ende 63 dient somit als Anschlagelement, das mit dem von der Schulter 33 der Ausnehmung 31 gebildeten anderen Anschlagelement zusammenwirkt. Da die Ausnehmung 31 bei dem bisherigen Scharnierteil 5 bereits vorhanden ist, läßt sich durch einfaches Vorsehen der Zunge 61 beim bereits vorhandenen Verschlußteil 7 eine den Verlagerungsweg begrenzende Anschlagvorrichtung schaffen. Zusätzliche Bauelemente sind hierfür nicht notwendig.

In Figur 1B ist ein zweites Ausführungsbeispiel eines Gehäuses 3 wiedergegeben. Gleiche Teile beziehungsweise gleich wirkende Teile wie in den Figuren 1A und 2 bis 4 sind mit denselben Bezugszeichen versehen, so daß lediglich auf die Unterschiede hinsichtlich des Gehäuses 3 in Figur 1A eingegangen wird. Das Scharnierteil 5 weist eine Stufe 27 auf, die unter einem Winkel zu einer gedachten Horizontalen verläuft. Somit sind die Längsabschnitte 21 und 25 (Figur 4a) des Verschlußteils 5 über eine schiefe Ebene miteinander verbünden. Entsprechend ist die Stirnseite T des Gehäuses 3 beziehungsweise der oberen Gehäusewand 13.1 ausgebildet. Die Stirnwand T bildet somit einen Anschlag für die Stufe 27, so daß das Scharnierteil 5 nicht zu weit in das Gehäuse 3 beziehungsweise in die Ausnehmung 11 hineingezogen werden kann.

In der oberen Gehäusewandung 13.1 ist ein Durchbruch 3C vorgesehen, der in der Ausnehmung 15 mündet. Mithin ist die Lasche 55 des Verschlußteils 7 durch einen in den Durchbruch 3C einsteckbaren Gegenstand betätigbar, so daß die in Figur 1B dargestellte Verrasterung der Lasche 55 mit der Wand 17 der Ausnehmung 15 aufgehoben werden kann. Somit wird eine lösbare Rasteinrichtung 55b gebildet, wodurch das Federscharnier 1 wieder zerlegbar ist, wenn das Verschlußteil 7 zusammen mit dem Scharnierteil 5 und der Feder 9 wieder aus dem Gehäuse 3 herausgenommen werden sollen. Der Durchbruch 3C kann als Bohrung realisiert sein.

Die Wand 17, die durch eine Begrenzungswand 17B der Ausnehmung 15 gebildet ist, ist im Ausführungsbeispiel gemäß Figur 1B an der Gehäuseoberseite 3b angeordnet.

In Figur 1B ist noch ersichtlich, daß das Gehäuse 3 als geschlossenes Gehäuse realisiert ist, das einen Gehäuseboden 3B umfaßt, der mit den übrigen Gehäusewänden einstückig realisiert ist. Das heißt, das Gehäuse 3 ist lediglich an seiner Stirnseite offen ausgebildet, so daß das Scharnierteil 5 zusammen mit dem Verschlußteil 7 und der Feder 9 in das Gehäuse 3 einbringbar ist.

Das Verschlußteil 7 stützt sich mit seinem Steg 47 an einer Gehäuseinnenwand ab. Eine untere Abstützung ist durch eine Erhebung E gebildet, die in das Gehäuseinnere hineinragt und durch vorzugsweise zwei quer zur Längsrichtung des Gehäuses 3 verlaufende Stege S gebildet ist. Somit liegt das Verschlußteil 7 beabstandet zum Gehäuseboden 3A. Die Stege S sind vorzugsweise einstückig mit dem Gehäuseboden 3A beziehungsweise Gehäuse 3 ausgebildet.

In Figur 1C ist ein weiteres Ausführungsbeispiel eines Federscharniers 1 wiedergegeben. Es unterscheidet sich gegenüber dem Federscharnier 1 gemäß Figur 1B dadurch, daß das Verschlußteil 7 um seine Längsachse um 180° gedreht in das Gehäuse 3 eingebracht ist. Somit wirkt die Lasche 55 mit einer Ausnehmung 15 zusammen, die nun am Gehäuseboden 3A ausgebildet ist. Diese Ausnehmung 15 kann als Durchbruch realisiert sein, so daß sich die Lasche 55 an der Wand 17 der Ausnehmung 15 abstützt, so daß dadurch die Rasteinrichtung 55B realisiert ist.

Da das Verschlußteil 7 verdreht im Gehäuse 3 angeordnet ist, wird ein Scharnierteil 5 verwendet, welches an seiner Oberseite 29' die in Figur 4a gestrichelt dargestellte Ausnehmung 31' aufweist. Die elastische Zunge 61 des Verschlußteils 7 wirkt somit mit dieser Ausnehmung 31' zusammen, die an der Oberseite 29' vorgesehen ist. Selbstverständlich ist es auch möglich, ein Scharnierteil 5 bereitzustellen, das sowohl an der Unterseite 29 als auch an der Oberseite 29' eine Ausnehmung 31 aufweist, so daß für unterschiedliche Gehäuse und unterschiedlich in das Gehäuse eingesetze Verschlußteile nur eine Ausführung des Scharnierteils hergestellt werden muß, das jedoch in jedes Gehäuse beziehungsweise mit jedem Verschluß zusammenwirken kann. Im übrigen sind gleiche Teile wie in den übrigen Figuren 1A, 1B und 2 bis 4 mit denselben Bezugszeichen versehen. Insofern wird auf deren nochmalige Beschreibung verzichtet.

In Figur 1C sind an der Unterseite des Gehäusebodens 3A zumindest eine, gegebenenfalls auch zwei, insbesondere jedoch vier Schweißwarzen X vorgesehen, wobei jeweils zwei Schweißwarzen X einem Ende des Gehäusebodens 3A zugeordnet sind und in Figur 1C hintereinander liegen, so daß lediglich eine Schweißwarze X zu sehen ist. Die Schweißwarzen X dienen dazu, einen Brillenbügel 69 (Figur 1B) mit dem Gehäuse 3 durch Schweißen zu verbinden. Bei einem Scheißvorgang werden die Schweißwarzen X erhitzt, so daß sie sich verformen können und dabei eine feste Verbindung mit dem Brillenbügel 69 eingehen.

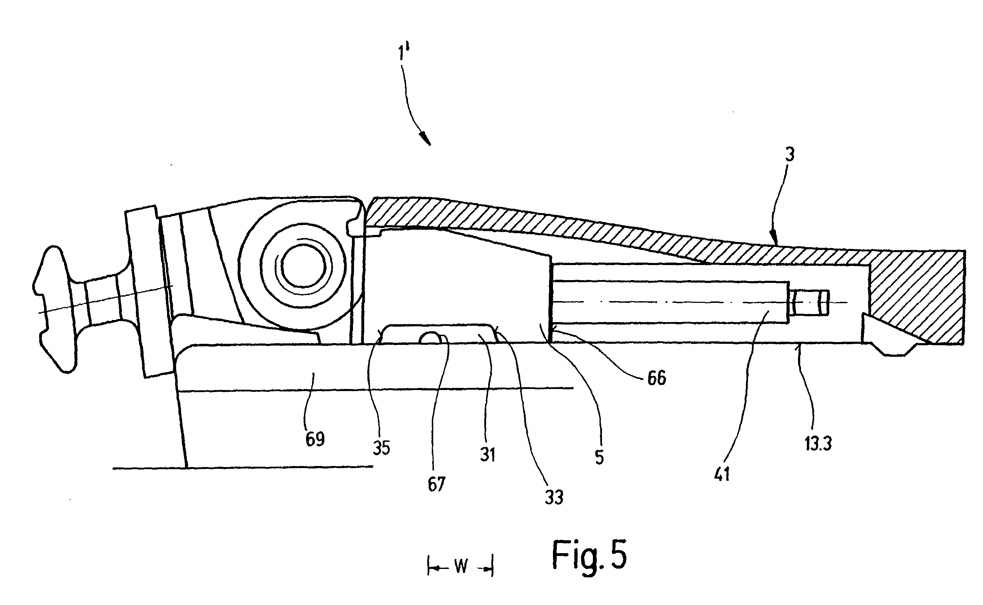

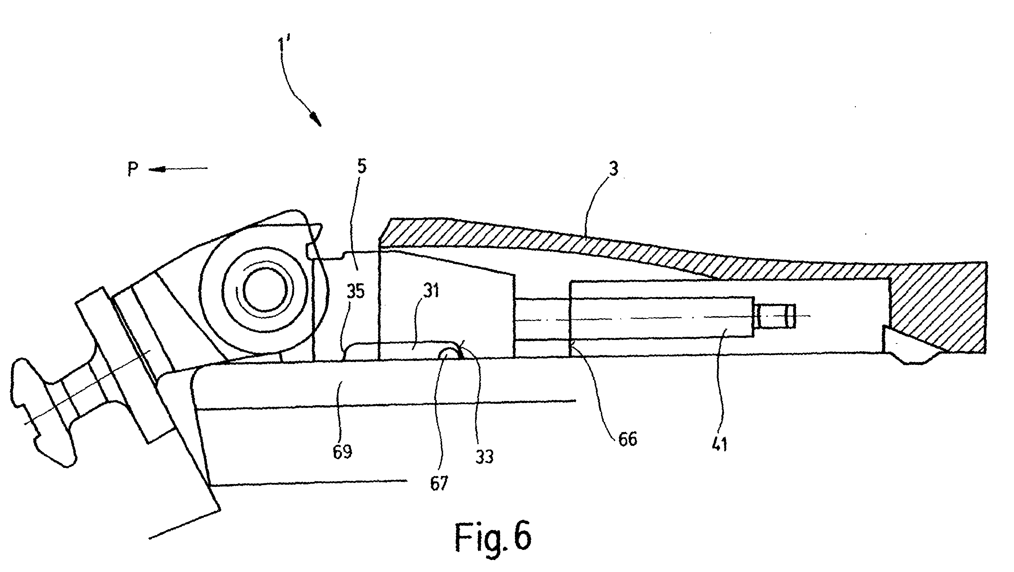

Ein weiteres Ausführungsbeispiel der Erfindung ist in den Figuren 5 und 6 dargestellt. Das in Figur 5 gezeigte Federscharnier 1' entspricht in seiner Funktionalität dem bereits mit Figur 1 beschriebenen Federscharnier 1. Deshalb wird auf eine Beschreibung der mit gleichen Bezugszeichen gekennzeichneten Teile verzichtet. Darüber hinaus sind der Übersichtlichkeit wegen nicht alle Bauelement gezeichnet. Nicht zu erkennen ist beispielsweise, daß das als Widerlager für die Feder dienende Verschlußteil Teil des Gehäuses 3 ist. Das Widerlager wird gebildet durch eine Verengung der Ausnehmung 11, die rein schematisch durch eine Linie 66 angedeutet ist.

Auch im vorliegenden Ausführungsbeispiel weist das Scharnierteil 5 eine Ausnehmung 31 auf, die durch die beiden Schultern 33 und 35 in Längsrichtung begrenzt wird. Im Bereich zwischen den beiden Schultern 33, 35 ragt ein Vorsprung 67 in die Ausnehmung 31 hinein. Dieser Vorsprung 67 ist an der Unterseite 13.3 des Gehäuses 3 angebracht. Aus fertigungstechnischen Gründen ist dieses Ausführungsbeispiel dann realisierbar, wenn die Unterseite 13.3 durch einen Brillenbügel 69 gebildet wird. Beim Zusammenbau wird die Baueinheit, bestehend aus Gehäuse 3 und Scharnierteil 5 mit Feder 9, auf den Brillenbügel 69 mit der offenen Seite 13.3 des Gehäuses 3 aufgesetzt, derart, daß der Vorsprung 67 in die Ausnehmung 31 ragt.

Wird nun das Scharnierteil 5 in Richtung des Pfeils P verlagert, so verringert sich der mit w gekennzeichnete Abstand zwischen Vorsprung 67 und Schulter 33 kontinuierlich. Sobald die maximal gewünschte Verlagerungsstrecke erreicht ist, schlägt die Schulter 33 am Vorsprung 67 an und verhindert somit eine weitere Verlagerung in Richtung des Pfeils P. Folglich wird wie im ersten Ausführungsbeispiel eine Anschlagvorrichtung geschaffen, die aus den beiden Anschlagelementen 67 und 33 besteht. Auch hier ist die Herstellung der Anschlagvorrichtung sehr einfach, da lediglich der Vorsprung 67 am Bügel 69 vorzusehen ist. Weitere Bauelemente sind nicht notwendig.

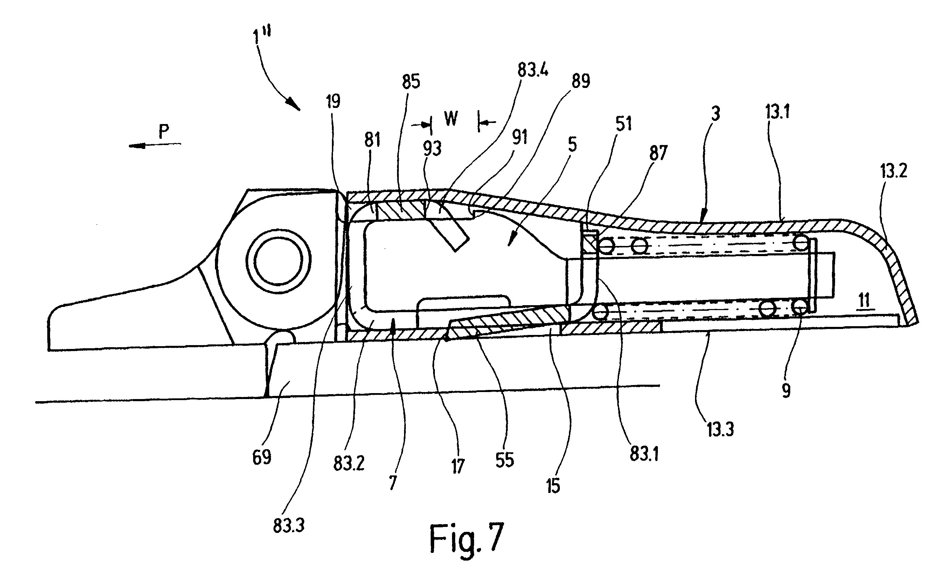

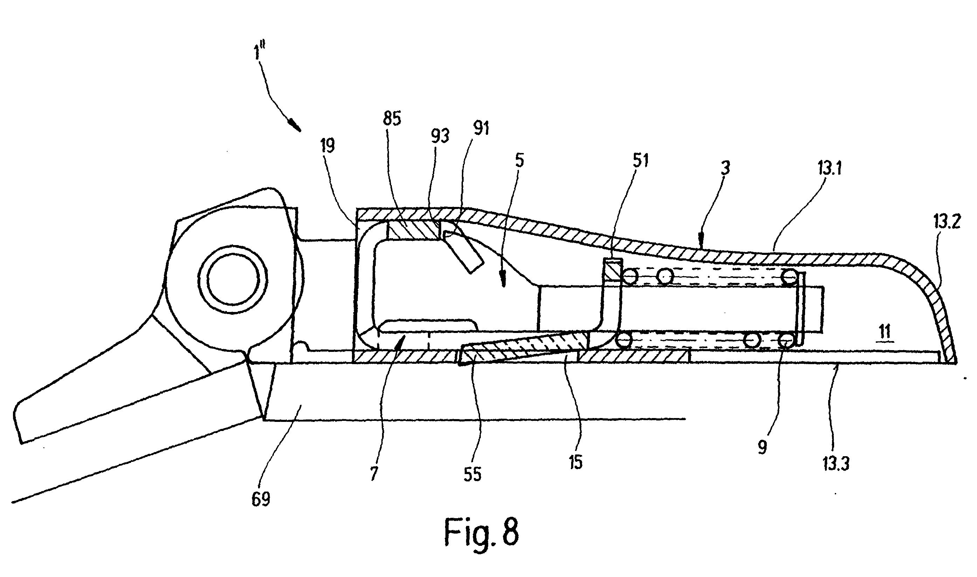

Ein drittes Ausführungsbeispiel der Erfindung ist in den Figuren 7 und 8 dargestellt. Das in Figur 7 gezeigte Federscharnier 1" entspricht in seiner Funktionalität dem bereits mit Figur 1 beschriebenen Federscharnier 1. Deshalb wird auf eine Beschreibung der mit gleichen Bezugszeichen gekennzeichneten Teile verzichtet.

Das Verschlußteil 7 umfaßt zwei Seitenelemente 81, die parallel zueinander angeordnet sind und die Funktion der beiden Seitenwände 43, 45 des in Figur 3 gezeigten Verschlußteils 7 übernehmen. In den beiden Figuren 7 und 8 ist lediglich eines der beiden Seitenelemente 81 zu erkennen. Im Gegensatz zu dem ersten Ausführungsbeispiel sind die beiden Seitenelemente 81 nicht flächig, sondern vielmehr stabförmig ausgebildet. Die beiden Seitenelemente 81 sind so ausgebildet, daß ein Längsabschnitt 83.1 das Abschlußelement 51 bildet, ein sich daran anschließender Längsabschnitt 83.2 parallel und benachbart zur Gehäuseunterseite 13.3 verläuft, ein sich daran anschließender Längsabschnitt 83.3 parallel zur Öffnung 19 sich erstreckt und ein Endabschnitt 83.4 benachbart zur oberen Gehäuseseite 13.1 verläuft. Beide Seitenelemente 81 sind unter anderem über einen sich senkrecht zur Zeichenebene erstreckenden Steg 85 im Bereich des Längsabschnitts 83.4 und einen weiteren sich ebenfalls senkrecht zur Zeichenebene erstreckenden Steg 87 miteinander verbunden. Selbstverständlich können weitere Verbindungselemente vorgesehen sein.

Im Bereich des Längsabschnitts 83.2 ist am Verschlußteil 7, das heißt an einem oder beiden Seitenelementen 81, die Lasche 55 angebracht, die verriegelnd mit der an der Unterseite 13.3 des Gehäuses 3 vorgesehenen Ausnehmung 15 zusammenwirkt. Die Wirkungsweise dieser Verriegelung stimmt mit derjenigen des ersten Ausführungsbeispiels überein. Der Unterschied besteht lediglich darin, daß Lasche 55 und Ausnehmung 15 im Bereich der unteren Gehäuseseite 13.3 vorgesehen sind.

Das Scharnierteil 5 weist an einer der oberen Gehäuseseite 13.1 zugewandten Seite eine Stufe 89 auf, deren Stufenfläche 91 senkrecht zur Längsrichtung des Federscharniers 1" verläuft. Die Stufenfläche 91 ist einer ebenfalls senkrecht zur Längsrichtung des Federscharniers 1'' verlaufenden Fläche 93 des Stegs 85 zugewandt. Bezogen auf die öffnung 19 ist die Stufe 89 hinter dem Steg 85 am Scharnierteil 5 vorgesehen. In der Figur 7 ist der Abstand zwischen der Fläche 93 des Stegs 85 und der Stufenfläche 91 mit w gekennzeichnet.

Wird das Scharnierteil 5 in Pfeilrichtung P verlagert, so verringert sich der zwischen der Fläche 83 und der Stufenfläche 91 definierte Abstand kontinuierlich. Sobald das Scharnierteil 5 um einen vorbestimmten Weg verlagert ist, stößt die Stufenfläche 91 an der Fläche 93 des Stegs 85 an und verhindert damit ein weiteres Herausziehen des Scharnierteils 5. Diese Position ist in Figur 8 dargestellt. Deutlich zu erkennen ist, daß die Stufenfläche 91 an der Fläche 93 des Stegs 85 anliegt.

Da es sich bei dem Verschlußteil 7 um ein Standardbauteil handelt, muß zur Schaffung dieser Anschlagvorrichtung, die aus den beiden Anschlagelementen 91 und 93 besteht, lediglich die Stufenfläche 91 am Scharnierteil 5 eingebracht werden. Weitere Änderungen sind nicht notwendig. Damit läßt sich auch bei diesem Ausführungsbeispiel ein kostengünstiger, leicht herstellbarer interner Anschlag erzielen.

Bei allen beschriebenen Ausführungsbeispielen muß darauf geachtet werden, daß der Abstand w, der die maximale Verlagerungsstrecke angibt, so gewählt wird, daß die Feder 9 nicht vollständig zusammengedrückt wird, das heißt auf Block gesetzt ist, wenn die Schulter 33 das Anschlagelement 63 beziehungsweise 67 erreicht.

Selbstverständlich sind auch andere Lösungen für ein Anschlagelement denkbar, die mit der Schulter 33 oder einer anderen Fläche 91 des Scharnierteils 5 zusammenwirken.

Das Gehäuse 3 des Federscharniers 1, 1' 1'' wird in bevorzugter Ausführungsform in einem Pulver-Spritzguß-Verfahren (Powder-Injection-Molding; Metall-Injection-Molding) hergestellt. Bei diesen Verfahren wird ein geeignetes Metallpulver mit einem pulverförmigen Binder gemischt. Vorzugsweise wird auf eine homogene Vermischung der beiden Grundsubstanzen besonderen Wert gelegt.

Das Metallpulver-Binder-Gemisch wird in einer geeigneten Spritzgießmaschine vorzugsweise erwärmt und unter Druck in eine Gußform eingebracht, deren Kontur dem Gehäuse 3 des Federscharniers 1, 1', 1'' entspricht. Die Gußform ist mit einem Dorn versehen, der so angeordnet und ausgebildet ist, daß die Ausnehmung 11 und vorzugsweise die Ausnehmung 15 und der Durchbruch 3C gebildet werden. Selbstverständlich ist es jedoch auch möglich, die Ausnehmung 15 und den Durchbruch 3C nach dem Herstellen des Gehäuses 3 einzubringen. Bei dem Spritzgußvorgang, der ähnlich einem Kunststoffspritzguß-Verfahren abläuft, entsteht eine erste Vorform des Gehäuses 3, der sogenannte Grünling.

Nach dem Spritzgußvorgang wird die erste Vorform aus der Gußform entnommen und der Dorn herausgezogen, so daß die Ausnehmung 11 und gegebenenfalls die Ausnehmung 15 und der Durchbruch 3C gebildet wird. Die Ausnehmung 11 braucht also nicht in einem spanabhebenden Verfahren hergestellt werden, was die Herstellungskosten für das Federscharnier wesentlich reduziert. Außerdem sind die Ausnehmungen und gegebenenfalls der Durchbruch sehr maßgenau und besonders glatt. Besonders vorteilhaft ist es, daß das Äußere des Federscharniers 1 zylindrisch ausgebildet sein kann, ohne daß es zusätzlicher Bearbeitungs- oder Herstellungsschritte bedarf. Dadurch läßt sich ein besonders ästhetisches Federscharnier realisieren.

Die erste Vorform des Gehäuses wird zur Erzeugung einer zweiten Vorform erwärmt, wodurch der Binder aus der ersten Vorform ausgetrieben wird. Die zweite Vorform wird auch als Braunling bezeichnet.

In einem weiteren Schritt wird die erste Vorform gesintert, wobei ein üblicher Sinterofen einsetzbar ist.

In diesem Verfahrensschritt entsteht das fertige Gehäuse 3. Es kann nun bei Bedarf noch eine Oberflächenvergütung durchgeführt werden, was aber -und das ist ein großer Vorteil des Verfahrens- in der Regel nicht erforderlich ist.

Besonders vorteilhaft ist noch, daß eine freie Wahl der Metallpulver besteht. Insbesondere kann auch ein Titanpulver bei der Herstellung des Federgehäuses 3 eingesetzt werden.

## Patentansprüche

1. Federscharnier für Brillen mit einem Gehäuse (3), einem Scharnierteil (5), das zumindest teilweise innerhalb des Gehäuses (3) verschiebbar angeordnet ist, einem. Verschlußteil (7), das im Gehäuse (3) angeordnet ist, einer Feder (9), die sich einerseits am Scharnierteil (5) und andererseits am Verschlußteil (7) abstützt, und mit einer zwei Anschlagelemente aufweisenden Anschlagvorrichtung, **dadurch gekennzeichnet, daß** ein erstes Anschlagelement (33) am Scharnierteil (5) und ein zweites Anschlagelement (63) am Verschlußteil (7) angeordnet sind, wobei das Scharnierteil (5) zur Ausbildung des ersten Anschlagelements (33) eine Ausnehmung (31, 31') ausbildet, die in Verschieberichtung des Scharnierteiles (5) in einer Ebene mit einer elastischen Zunge (61) des Verschlußteiles (7), die zum Scharnierteil (5) gebogen ist und in die Ausnehmung (31, 31') eingreift, liegt, und daß ein durch die Anschlagvorrichtung begrenzter maximaler Verlagerungsweg (W) des Scharnierteiles (5) geringer ist.als ein maximaler Federweg des Federelementes (9).

2. Federscharnier nach Anspruch 1, **dadurch gekennzeichnet, daß** das zweite Anschlagelement (63) in die Ausnehmung (31) eingreift, und daß eine Wandung (33) der Ausnehmung (31, 31') das erste Anschlagelement bildet.

3. Federscharnier nach einem der vorhergehenden Ansprüche, **dadurch gekennzeichnet, daß** das Verschlußteil (7) zumindest einen Längsabschnitt (25) des Scharnierteils (5) umgibt und als Fuhrung dient.

4. Federscharnier nach einem der vorhergehenden Ansprüche, **dadurch gekennzeichnet, daß** das Verschlußteil (7) ein Verriegelungselement (55) und das Gehäuse (3) eine Ausnehmung (15) aufweisen, wobei das Verriegelungselement (55) in die Ausnehmung (15) einrastbar ausgebildet ist.

5. Federscharnier nach Anspruch 2, **dadurch gekennzeichnet, daß** die Ausnehmung (31, 31') an der der Unterseite oder Oberseite des Gehäuses (3) zugewandten Seite des Scharnierteils (5) vorgesehen ist.

6. Federscharnier nach einem der Ansprüche 1 bis 5, **dadurch gekennzeichnet, daß** ein Längsende der Zunge (61) am Verschlußteil (7) angebracht ist, und daß das andere Längsende (63) frei ist und in die Ausnehmung (31) des Scharnierteils (5) eingreift.

7. Federscharnier nach Anspruch 6, **dadurch gekennzeichnet, daß** das Verschlußteil (7) und die Zunge (61) einstückig ausgebildet sind.

8. Federscharnier nach einem der vorhergehenden Ansprüche, **dadurch gekennzeichnet, daß** das Verschlußteil (7) eine federnde Lasche (55) mit einem freien Ende (55A) aufweist, die zusammen mit einer am Gehäuse (3) ausgebildeten Wand (17) als Rasteinrichtung (55B) zusammenwirkt.

9. Federscharnier nach Anspruch 8, **dadurch gekennzeichnet, daß** die Wand (17) an der Gehäuseoberseite (3B) oder am Gehäuseboden (3A) ausgebildet ist.

10. Federscharnier nach Anspruch 9, **dadurch gekennzeichnet, daß** die Wand (17) eine Begrenzungswand (17B) der Ausnehmung (15) ist.

11. Federscharnier nach Anspruch 8, **dadurch gekennzeichnet, daß** das Gehäuse (3) einen Durchbruch (3C) aufweist, durch den die elastische Lasche (55) betätigbar ist.

12. Federscharnier nach Anspruch 11, **dadurch gekennzeichnet, daß** der Durchbruch (3C) in der Ausnehmung (15) mündet.

13. Federscharnier nach einem der Ansprüche 8 bis 12, **dadurch gekennzeichnet, daß** das Verschlußteil (7) beabstandet zum Gehäuseboden (3A) liegt.

14. Federscharnier nach Anspruch 13, **dadurch gekennzeichnet, daß** am Gehäuseboden (3A) eine Erhebung (E) vorgesehen ist, die in das Gehäuseinnere hineinragt.

15. Federscharnier nach Anspruch 14, **dadurch gekennzeichnet, daß** die Erhebung (E) durch zwei quer zur Längsrichtung des Gehäuses (3) verlaufende Stege (S) gebildet ist.

16. Federscharnier nach Anspruch 15, **dadurch gekennzeichnet, daß** die Stege (S) einstückig mit dem Gehäuseboden (3A) ausgebildet sind.

17. Federscharnier nach einem der vorhergehenden Ansprüche, **dadurch gekennzeichnet, daß** das Gehäuse (3) im Pulver-Spritzguß-Verfahren (PIM, Powder-Injection-Molding; MIM, Metal-Injection-Molding) hergestellt ist.

## Claims

1. Spring hinge for spectacles, having a housing (3), a hinge part (5), which is arranged such that it can be displaced at least partially within the housing (3), a closure part (7), which is arranged in the housing (3), a spring (9), which is supported on the hinge part (5), on the one hand, and on the closure part (7), on the other hand, and having a stop device which has two stop elements, **characterized in that** a first stop element (33) is arranged on the hinge part (5), and a second stop element (63) is arranged on the closure part (7), it being the case that the hinge part (5), in order to form the first stop element (33), forms a cutout (31, 31') which, in the displacement direction of the hinge part (5), is located in one plane with an elastic tongue (61) of the closure part (7), said tongue being bent toward the hinge part (5) and engaging in the cutout (31, 31'), and **in that** a maximum displacement path (W) of the hinge part (5), said displacement path being limited by the stop device, is smaller than the maximum spring excursion of the spring element (9).

2. Spring hinge according to Claim 1, **characterized in that** the second stop element (63) engages in the cutout (31), and **in that** a wall (33) of the cutout (31, 31') forms the first stop element.

3. Spring hinge according to one of the preceding claims, **characterized in that** the closure part (7) encloses at least one longitudinal section (25) of the hinge part (5) and serves as a guide.

4. Spring hinge according to one of the preceding claims, **characterized in that** the closure part (7) has a locking element (55) and the housing (3) has a cutout (15), the locking element (55) being designed such that it can be latched into the cutout (15).

5. Spring hinge according to Claim 2, **characterized in that** the cutout (31, 31') is provided on that side of the hinge part (5) which is directed toward the underside or top side of the housing (3).

6. Spring hinge according to one of Claims 1 to 5, **characterized in that** one longitudinal end of the tongue (61) is provided on the closure part (7), and **in that** the other longitudinal end (63) is free and engages in the cutout (31) of the hinge part (5).

7. Spring hinge according to Claim 6, **characterized in that** the closure part (7) and the tongue (61) are designed in one piece.

8. Spring hinge according to one of the preceding claims, **characterized in that** the closure part (7) has a resilient lug (55) which has a free end (55A) and interacts, as latching device (55B), with a wall (17) formed on the housing (3).

9. Spring hinge according to Claim 8, **characterized in that** the wall (17) is formed on the top side (3B) of the housing or on the base (3A) of the housing.

10. Spring hinge according to Claim 9, **characterized in that** the wall (17) is a boundary wall (17B) of the cutout (15).

11. Spring hinge according to Claim 8, **characterized in that** the housing (3) has a through-passage (3C) through which the elastic lug (55) can be actuated.

12. Spring hinge according to Claim 11, **characterized in that** the through-passage (3C) opens out in the cutout (15).

13. Spring hinge according to one of Claims 8 to 12, **characterized in that** the closure part (7) is spaced apart from the housing base (3A).

14. Spring hinge according to Claim 13, **characterized in that** provided on the housing base (3A) is an elevation (E) which projects into the housing interior.

15. Spring hinge according to Claim 14, **characterized in that** the elevation (E) is formed by two webs (S) running transversely to the longitudinal direction of the housing (3).

16. Spring hinge according to Claim 15, **characterized in that** the webs (S) are formed integrally with the housing base (3A).

17. Spring hinge according to one of the preceding claims, **characterized in that** the housing (3) is produced by powder injection moulding (PIM) or metal injection moulding (MIM).

## Revendications

1. Charnière à ressort pour lunettes, comprenant un boîtier (3), une partie de charnière (5) qui peut coulisser au moins en partie à l'intérieur du boîtier (3), une partie de fermeture (7) montée dans le boîtier (3), un ressort (9) s'appuyant d'un côté sur la partie de charnière (5) et de l'autre côté sur la partie de fermeture (7), et un dispositif de butée comportant deux éléments de butée,
**caractérisée en ce qu'**
- un premier élément de butée (33) est monté sur la partie de charnière (5) et un second élément de butée (63) sur la partie de fermeture (7), la partie de charnière (5) présentant, pour former le premier élément de butée (33) un évidement (31, 31') qui, dans la direction de coulissement de la partie de charnière (5), se trouve dans un même plan qu'une languette élastique (61) qui est portée par la pièce de fermeture (7) et qui est recourbée par rapport à la partie de charnière (5) et engagée dans l'évidement (31, 31'), et
- la course maximale du déplacement (W) que peut effectuer la partie de charnière (5) et qui est limitée par le dispositif de butée est inférieure à la course maximale de l'élément élastique (9).

2. Charnière à ressort selon la revendication 1,
**caractérisée en ce que** le second élément de butée (63) est engagé dans l'évidement (31), une paroi (33) de l'évidement (31, 31') formant le premier élément de butée.

3. Charnière à ressort selon l'une quelconque des revendications 1 ou 2,
**caractérisée en ce que**
la partie de fermeture (7) entoure au moins une section longitudinale (25) de la partie de charnière (5) et sert de guidage.

4. Charnière à ressort selon l'une quelconque des revendications précédentes,
**caractérisée en ce que**
la partie de fermeture (7) présente un élément de verrouillage (55) et le boîtier (3) une cavité (15), l'élément de verrouillage (55), étant constitué de manière à pouvoir se bloquer dans la cavité (15).

5. Charnière à ressort selon la revendication 2,
**caractérisée en ce que**
l'évidement (31, 31') est prévu sur la face inférieure ou sur la face supérieure du boîtier (3), située en regard de la partie de charnière (5).

6. Charnière à ressort selon l'une quelconque des revendications 1 à 5,
**caractérisée en ce que**
la languette (61) a une extrémité portée par la partie de fermeture (7) tandis que l'autre extrémité (63) est libre et engagée dans l'évidement (31) de la partie de charnière (5).

7. Charnière à ressort selon la revendication 6,
**caractérisée en ce que**
la partie de fermeture (7) et la languette (61) forment une seule pièce.

8. Charnière à ressort selon l'une quelconque des revendications précédentes,
**caractérisée en ce que**
la partie de fermeture (7) présente une languette élastique (55) possédant une extrémité libre (55A) qui coopère avec une paroi (17) prévue sur le boîtier (3) de manière à former un dispositif d'arrêt (55B).

9. Charnière à ressort selon la revendication 8,
**caractérisée en ce que**
la paroi (17) est formée sur la face supérieure (3B) du boîtier ou sur le fond (3A) du boîtier.

10. Charnière à ressort selon la revendication 9,
**caractérisée en ce que**
la paroi (17) est une paroi (17B) délimitant la cavité (15).

11. Charnière à ressort selon la revendication 8,
**caractérisée en ce que**
le boîtier (3) présente un passage (3C) à travers lequel on peut agir sur la languette élastique (55).

12. Charnière à ressort selon la revendication 11,
**caractérisée en ce que**
le passage (3C) débouche dans la cavité (15).

13. Charnière à ressort selon l'une quelconque des revendications 8 à 12,
**caractérisée en ce que** la partie de fermeture (7) est à une certaine distance du fond (3A) du boîtier .

14. Charnière à ressort selon la revendication 13,
**caractérisée en ce que**
le fond du boîtier (3A) présente une partie en relief (E) qui pénètre à l'intérieur du boîtier.

15. Charnière à ressort selon la revendication 14,
**caractérisée en ce que**
la partie en relief (E) est constituée par deux nervures (S) perpendiculaires à la direction longitudinale du boîtier (3).

16. Charnière à ressort selon la revendication 15,
**caractérisée en ce que**
les nervures (S) sont monobloc avec le boîtier (3A).

17. Charnière à ressort selon l'une quelconque des revendications précédentes
**caractérisée en ce que**
le boîtier (3) est fabriqué par le procédé d'injection de poudre (PIM, Powder-Injection-Molding) ou par moulage de métal par injection (MIM, Metal-Injection-Molding).
